Europäisches Patentamt

European Patent Office

Office européen des brevets

(11) Veröffentlichungsnummer: **0 348 676**

**A2**

(12) EUROPÄISCHE PATENTANMELDUNG

(21) Anmeldenummer: 89109621.6

(51) Int. Cl.⁴ **F02C 7/143**

(22) Anmeldetag: 29.05.89

(30) Priorität: 27.05.88 DE 3817986

(43) Veröffentlichungstag der Anmeldung:
03.01.90 Patentblatt 90/01

(84) Benannte Vertragsstaaten:
DE ES FR GB IT SE

(71) Anmelder: MTU MOTOREN- UND
TURBINEN-UNION MÜNCHEN GMBH
Dachauer Strasse 665 Postfach 50 06 40
D-8000 München 50(DE)

(72) Erfinder: Krammer, Paul, Dr.
Hörlholzweg 16
D-8031 Gilching(DE)

(54) Gasturbinenanlage mit Zwischenkühlung.

(57) Gasturbinenanlage, bei der die aus einem wiederdruckteil (1) des Verdichters abströmende Verdichterluft vor ihrem Eintritt in einen Hochdruckteil (2) des Verdichters über einen Wärmetauscher (8) unter Beiziehung eines von außen zugeführten Kühlmittels (10) zwischengekühlt wird; dabei soll das aus dem Wärmetauscher (8) abströmende Kühlmittel der Gasturbinenanlage zur Erhöhung des thermischen Wirkungsgrades zugeführt werden; vorteilhaft kann das abströmende Kühlmittel zur Turbinenkühlung, insbesondere zur Turbinegehäusekühlung, zur lastabhängigen thermischen Steuerung (Radialspaltoptimierung) und zur Kühlung von Leit- und/oder Laufschaufeln verwendet werden.

EP 0 348 676 A2

## Gasturbinenanlage mit Zwischenkühlung

Die Erfindung bezieht sich auf eine Gasturbinenanlage nach dem Oberbegriff des Patentanspruchs 1.

Es ist bekannt, bei stationären Gasturbinenanlagen und z.B. bei Gasturbinenanlagen zum Antrieb von Schiffen eine sogenannte "Zwischenkühlung" einzusetzen. Die Zwischenkühlung verringert die Kompressionsarbeit im Verdichter und erhöht damit die von der Gasturbinenanlage abgegebene Leistung. Bei einer solchen Zwischenkühlung wird dem Verdichterhauptstrom mittels eines Wärmetauschers Wärme entzogen; der Verdichterhauptstrom wird nach einem ersten Teilverdichter (Niederdruckteil) durch den Wärmetauscher geleitet und nach der Abkühlung im Wärmetauscher in die Gasturbine zurückgeführt, um anschließend von einem zweiten Teilverdichter (Hochdruckteil) weiter verdichtet zu werden. Dabei wird zur Kühlung des Verdichterhauptstroms im Wärmetauscher Luft verwendet, die nach ihrer Aufheizung ins Freie abgeblasen wird, so daß deren Wärme für den gesamten Prozess verloren ist.

Ferner ist es bei Gasturbinentriebwerken allgemein im Interesse hoher Prozeßtemperaturen, insbesondere hoher Turbineneintrittstemperaturen, z.B. luftgekühlte Leit- und Laufschaufeln an der Hochdruckturbine vorzusehen; die hierfür erforderliche Kühlluftentnahme aus einem Verdichter, bzw. am Ende eines Hochdruckverdichters, führt zu nicht unbeachtlichen Leistungseinbußen im Kreisprozeß des Triebwerks. Schon vorgeschlagene lastzyklenabhängig gesteuerte Kühlluftzufuhren, verbrauchsoptimal gestaltete Schaufelkühlluftgeometrien wie aber u. a. auch die Auswahl hochlegierter temperaturbeständiger Schaufelwerkstoffe verursachen einen vergleichsweise hohen Bau- und Kostenaufwand. Im allgemeinen kann insbesondere bei Strahltriebwerke für Flugzeuge wie aber auch bei neuzeitlichen stationären Hochleistungsgasturbinenanlagen auf einen derartigen Aufwand nicht verzichtet werden, um hinsichtlich verlangter stetig steigender Turbineneintrittstemperaturen auf der sicheren Seite liegen zu wollen.

Der Erfindung liegt die Aufgabe zugrunde, eine insbesondere stationäre Gasturbinenanlage mit Zwischenkühlung nach der eingangs genannten Art anzugeben, die einen äußerst wirtschaftlichen Arbeitsprozeß ermöglicht.

Die gestelle Aufgabe ist mit den Merkmalen des Kennzeichnungsteils des Patentanspruchs 1 erfindungsgemäß gelöst.

Die Erfindung schafft also die Möglichkeit, das kühlende Medium aus dem Zwischenkühler bzw. hierfür vorgesehenen Wärmetauscher für den Gesamtprozeß äußerst sinnvoll nutzbar zu machen, und zwar durch die Rückführung in den Prozeß, indem das Kühlmedium insbesondere zur Bauteilkühlung, beispielsweise zur Kühlung von Leit- und Laufschaufeln einer oder mehrerer Turbinen nutzbar gemacht werden kann.

Hierzu muß das Kühlmedium mit hinreichend großem Druck und kühltechnisch optimaler Temperatur den zu kühlenden Bauteilen zugeführt werden.

Die kühltechnisch optimale Temperatur folgt aus den Forderungen an die Lebensdauer der zu kühlenden Bauteile. Dabei kann eine zu niedrige Kühllufttemperatur zu einer unerwünscht geringen Lebensdauer führen, da sich in diesem Fall möglicherweise zu große Temperaturdifferenzen im Bauteil ergeben können. Folglich kann also eine gewisse Aufheizung des Kühlmediums, wie sie aus der erfindungsgemäßen Anordnung resultiert, zu einem äußerst praktikablen und wirtschaftlichen Ergebnis führen.

Der erforderliche Druck des Kühlmediums ergibt sich dabei aus der Größe des Gegendrucks der Austrittsstelle des Kühlsystems. Im Falle der Kühlung von Leit- bzw. Laufschaufeln von Turbinen liegen die Gegendrücke entsprechend der zu kühlenden Turbinenstufe auf einem vergleichsweise hohen Niveau. Bei zu kühlenden Gehäusestrukturen beispielsweise können die Gegendrücke wiederum je nach den lokalen Verhältnissen relativ niedrig sein, bzw. bei Ausblasung in die Umgebung dem Umgebungsdruck entsprechen.

Bei der Zwischenkühlung wird als Kühlmedium im allgemeinen Luft verwendet. Einer erfindungsgemäßen Verwendung von Luft als Kühlmittel zwecks Kühlung von Bauteilen wären gegebenenfalls Grenzen dadurch gesetzt, daß der anfallende Druck der Kühlluft vergleichsweise niedrig zu veranschlagen wäre.

In vorteilhafter Ausgestaltung kann zur Zwischenkühlung Wasser bzw. Wasserdampf eingesetzt werden. Es kann also Wasser vor der Erwärmung im Zwischenkühler auf hohen Druck gebracht werden, wobei die hierfür aufzuwendende Arbeit - wegen der Inkompressibilität von Wasser - vergleichsweise gering zu veranschlagen wäre. Im Zwischenkühler kann somit das Wasser verdampft werden und der entstehende Dampf zur Kühlung von Bauteilen in der Gasturbine verwendet werden. Als Kühlmittel ist Wasserdampf gut geeignet und bietet gegenüber Luft den Vorteil höherer erreichbarer Wärmeübergangswerte und wegen der größeren Wärmekapazität den Vorteil von niedrigeren erforderlichen Massenströmen. Speziell zur Kühlung von Leit-und Laufschaufeln in Turbinen wäre also Wasserdampf bestens geeignet.

Ferner kann das aus dem Wärmetauscher bzw. Zwischenkühler abströmende Kühlmittel zur thermischen Steuerung von Strukturbauteilen der Gasturbinenanlage zwecks Radialspaltoptimierung (Einhaltung minimaler konstanter Schaufelspitzenspalte) verwendet werden; dabei ist z.B. eine zeitlich begrenzte oder verzögerte thermische Steuerung von Gehäusestrukturbauteilen, etwa der Nutzleistungsturbine, möglich (Anfahren der Nutzturbine).

Ausgestaltungen des Grundgedankens der Erfindung ergeben sich im übrigen aus den Merkmalen der Patentansprüche 2 bis 13.

Anhand der Zeichnungen ist die Erfindung beispielsweise weiter erläutert; es zeigen:

Fig. 1 ein schematisch als Mittellängsschnitt dargestellte obere Hälfte der Gasturbinenanlage mit Zwischenkühlung, unter Verwendung von Wasser als Zwischenkühlmittel und in einer ersten Ausführungsform,

Fig. 2 einen schematisch dargestellten Teillängsschnitt der Niederdruckturbine unter Verdeutlichung gemäß dem Prozeß nach Fig. 1 gewonnenen dampfförmigen Kühlmittels sowie dessen Zuführung zwecks Schaufelkühlung,

Fig. 3 eine schematisch als Mittellängsschnitt dargestellte obere Hälfte der Gasturbinenanlage mit Zwischenkühlung in einer zweiten Ausführungsform, unter Verwendung von außen zugeführter Verdichterluft als Zwischenkühlmittel nebst steuerbaren Mittel für die Zuführung der aus dem Wärmetauscher bzw. Zwischenkühler abströmenden Luft zur Turbinengehäusekühlung (Niederdruckturbine) und

Fig. 4 einen teilweise abgebrochen dargestellten Teillängsschnitt einer mehrstufigen Niederdruckturbine, und zwar im Hinblick auf den Prozeß nach Fig. 3 unter Verdeutlichung einer Verwendung der aus der Zwischenkühlung gewonnenen Prozeßluft als zeitlich steuerbare Aufprallkühlluft am betreffenden Gehäuse dieser Niederdruckturbine.

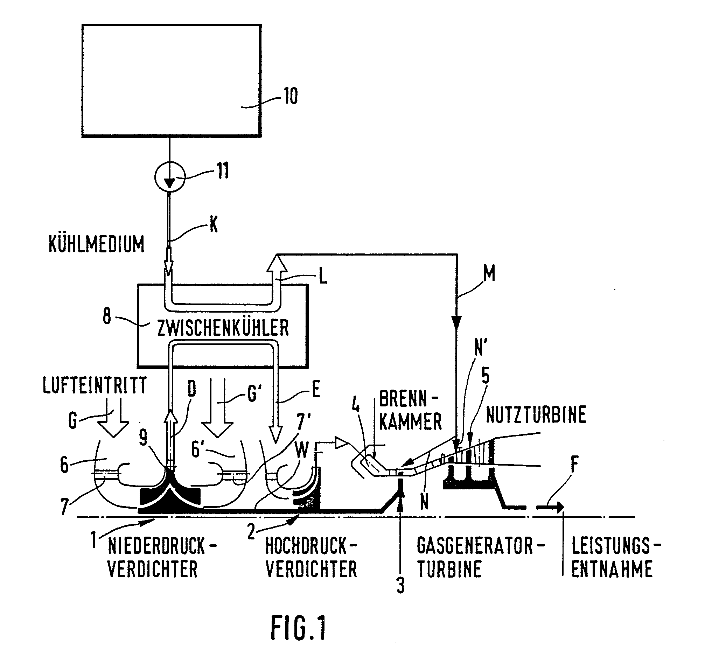

Bei der schematisch dargestellten Gasturbinenanlage nach Fig.1 besteht der Gasgenerator aus einem auf einer gemeinsamen Welle W sitzenden Niederdruckverdichter, einem Hochdruckverdichter 2 und einer Gasgeneratorturbine 3. Die Brennkammer des Gasgenerators ist mit 4 bezeichnet. Der Gasgeneratorturbine 3 ist eine Nutzleistungsturbine 5 freilaufend aero- thermodynamisch nachgeschaltet. Pfeil F kennzeichnet die Leistungsentnahme an der zuvor genannten Nutzleistungsturbine bzw. Niederdruckturbine 5.

Beim Ausführungsbeispiel Fig. 1 ist z.B. der Hochdruckverdichter 2 als Radialverdichter ausgebildet. Der zuvor genannte Niederdruckverdichter 1 ist hier beispielsweise als doppelflutiger, Rücken an Rücken radial beschaufelter und durch strömter Verdichter ausgebildet; die Pfeile G,G' kennzeichnen den beidseitigen hier von der Seite aus erfolgenden Lufteintritt (Ansaugluft) in den doppelflutigen Niederdruckverdichter 1. Dabei sind spiralförmige Lufteintrittsgehäuse 6 bzw. 6' vorgesehen, in denen verstellbare Vorleitschaufeln 7 bzw. 7' angeordnet sind. Erfindungsgemäß handelt es sich also um eine Gasturbinenanlage mit Zwischenkühlung. Bei dieser Zwischenkühlung wird dem Verdichterhauptstrom eines Wärmetauschers 8 bzw. Zwischenkühlers Wärme entzogen; der Verdichterhauptstrom wird also hinter dem Niederdruckverdichter 1, hier also am gemeinsamen Punkte 9 gemäß Pfeil D in den Wärmetauscher 8 geleitet und nach der Abkühlung im Wärmetauscher 8 in die Gasturbinenanlage zurückgeführt, um anschließend gemäß Pfeil E vom Hochdruckverdichter 2 weiterverdichtet zu werden. Für die Zwischenkühlung wird gemäß Fig.1 Wasser verwendet, das von einem Wasserspeicher 10 aus und über eine Pumpe 11 gemäß Pfeil K in den Wärmetauscher 8 geleitet wird. Im Wärmetauscher 8 bzw. Zwischenkühler wird nun das gemäß Pfeil K zugeführte Wasser verdampft.

Grundgedanke der Erfindung ist dabei, daß das aus dem Wärmetauscher 8 abströmende Kühlmittel der Gasturbinenanlage, hier also der Wasserdampf gemäß Pfeil L zur Erhöhung des thermischen Wirkungsgrades der Gasturbinenanlage zugeführt werden kann. Dies äußert sich beim vorliegenden Ausführungsbeispiel darin, daß der aus dem Wärmetauscher 8 abströmende Wasserdampf L über eine Leitung M als Kühlmittel zur Bauteil-, insbesondere Turbinenkühlung verwendet werden soll. Wie schematisch durch die Pfeile N bzw. N' verdeutlicht, kann also der Wasserdampf aus der Leitung M hier sowohl zur Kühlung der Gasgeneratorturbine 3 als auch zur Kühlung der Nutzleistungsturbine 5 verwendet werden.

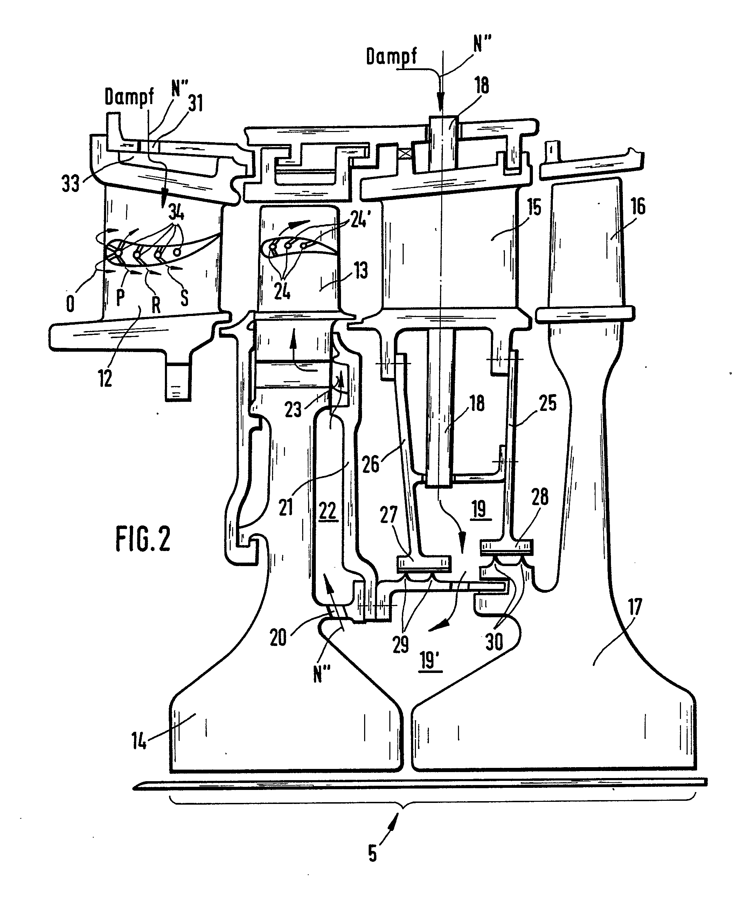

Fig. 2 verkörpert eine schematisch dargestellte Niederdruckturbine 5. Von dieser Niederdruckturbine 5 sind hier beispielsweise die ersten beiden Axialturbinenstufen verdeutlicht. Dabei sind die Eintrittsleitschaufeln der ersten Stufe mit 12 bezeichnet, die Laufschaufeln der ersten Turbinenstufe mit 13. Die zugehörige Laufradscheibe der ersten Turbinenstufe ist mit 14 bezeichnet. Ferner sind in Fig. 2 die Leitschaufeln der zweiten Turbinenstufe mit 15 und die dieser Stufe zugehörigen Turbinenlaufschaufeln mit 16 bezeichnet. Die Laufschaufeln 16 der zweiten Turbinenstufe sind an einem Turbinenlaufrad bzw. an der Radscheibe 17 verankert.

Gemäß Fig. 2 kann also ein Teil des in Fig. 1 erwähnten Wasserdampfes (Pfeil N') gemäß Pfeil N'' über eine Hülse 18, die die hohlen Leitschaufeln 15 durchdringt, örtlich abgeschirmten, miteinander kommunizierenden Ringräumen 19 und 19' zugeführt werden. Über eine Bohrung bzw. mehrere Bohrungen 20, die an einen mitrotierenden Teil der Radscheibe 14 angeordnet sind, gelangt der genannte Wasserdampf N'' in einen der Laufradscheibe 14 benachbarten, von einer mitrotierenden Tragscheibe 21 gebildeten weiteren Ringraum 22. Aus dem genannten weiteren Ringraum 22 gelangt dann der Wasserdampf in einen stirnseitig äußeren Ringkanal 23. Aus dem äußeren oberen Ringkanal 23 kann dann der Wasserdampf entlang bzw. über die betreffenden Schaufelfüße und dann über geeignete Kanäle 24 in den Laufschaufeln 13 zur Schaufelkühlung zugeführt werden. Zumindest ein Teil des so zugeführten Wasserdampfes kann über die betreffenden Kanäle 24 und weiter dargestellte Bohrungen 24' am Schaufelprofil in die Heißgasströmung abgeblasen werden, um hier insbesondere eine gezielte Kühlung der temperaturgefährdeten Nasenkante der Schaufel zu bewirken sowie, um schließlich entlang der Außenhaut der Schaufel eine vergleichsweise hohe Kühleffizienz zu erbringen. Dabei wäre noch zu erwähnen, daß der zuerst genannte ringförmige Kanal 19 zwischen Wandabschnitten 25 und 26 ausgebildet ist, die zugleich Träger stationärer Dichtmittel 27 bzw. 28 sind. Die genannten stationären Dichtmittel 27 und 28 korrespondieren mit labyrinthartigen Dichtspitzen 29 bzw. 30 des Rotors. Mit anderen Worten sind die Labyrinthspitzen 30 an der Laufradscheibe 17, die anderen Labyrinthspitzen 29 der Dichtung über die mitrotierende Deckscheibe 21 am Laufrad 14 angeordnet. Ein übriger Teil des der Niederdruckturbine 5 zuzuführenden Anteils N' an Wasserdampf kann gemäß Pfeilen N''' den Eintrittsleitschaufeln 12 zur Kühlung zugeführt werden. Diese Wasserdampfzufuhr kann ebenfalls über das Außengehäuse der Niederdruckturbine erfolgen. Gemäß Pfeilen N''' kann also der Wasserdampf über Bohrungen 31 von Leitschaufeltragsegmenten deckbandseitig angeordneten Ringräumen 33 zugeführt werden, um von dort einzelnen Bohrungen 34 der Leitschaufeln 12 zugeführt zu werden. Beispielsweise kann dann weiter der Wasserdampf aus den einzelnen Bohrungen 34 bzw. Hohlräumen über geeignete, ins Schaufelfleisch eingearbeitete Kanäle in Richtung der Pfeile 0,P,R und S entlang der betreffenden Schaufelaußenwände in den Heißgasstrom abgeführt werden. Neben einer intensiven konvektiven Kühlung der betreffenden Schaufeln 12 kann auf die gezeigte Weise eine hocheffiziente Filmkühlung des gesamten Schaufelmantels erreicht werden, insbesondere auch entlang der Nasenkante wie aber auch entlang der hochtemperaturbelasteten Schaufelhinterkante.

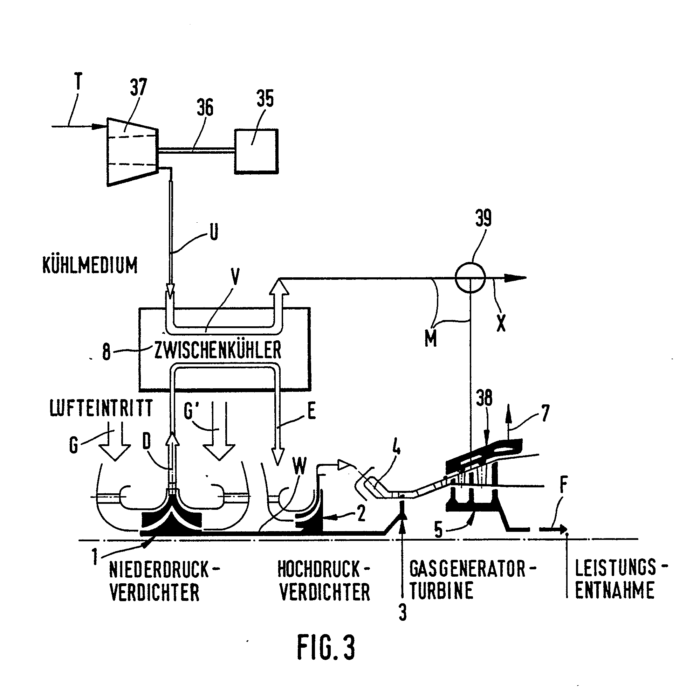

Fig. 3 veranschaulicht eine Gasturbinenanlage, die im wesentlichen mit derjenigen nach Fig.1 identisch ist. Dabei besteht wiederum der Gasgenerator aus auf gemeinsamer Welle W sitzendem Niederdruckverdichter 1 und Hochdruckverdichter 2 nebst Gasgeneratorturbine 3 sowie der zugehörigen Brennkammer 4. Die zugehörige Nutzleistungsturbine bzw. Niederdruckturbine 5 ist dem genannten Gasgenerator freilaufend nachgeschaltet mit entsprechender Leistungsentnahme F.

Auch hinsichtlich des grundsätzlichen Aufbaus der Zwischenkühlung ist die Anlage nach Fig. 3 mit derjenigen nach Fig.1 praktisch identisch. Der wesentliche Unterschied zu Fig. 1 besteht darin, daß anstelle von Wasser als Kühlmittel für die Zwischenkühlung gemäß Pfeil U separat erzeugte Verdichterluft verwendet wird. Hierzu treibt ein Motor, beispielsweise ein Elektormotor 35, über eine Welle 36 einen verhältnismäßig kleinen Axialverdichter 37 an. Der Axialverdichter 37 saugt äußere Umgebungsluft gemäß Pfeil T an. Die im Verdichter 37 verdichtete Luft wird gemäß Pfeil U als Zwischenkühlungsmittel dem Wärmetauscher 8 zugeführt. Dabei entzieht die dem Wärmetauscher 8 zugeführte Verdichterluft gemäß Pfeil V dem Verdichterhauptstrom einen Teil dessen darin enthaltener Wärme, und zwar zwischen dem Niederdruckverdichter 1 und dem Hochdruckverdichter 2. Die bei der Zwischenkühlung im Wärmetauscher 8 in geeigneter Weise aufbereitete Verdichterluft gemäß Pfeil V kann über die Leitung M dem Gehäuse 38 der Niederdruckturbine 5 zwecks Strukturbauteilkühlung bzw. Gehäusekühlung zugeführt werden. Nach vollzogener Kühlung des Gehäuses 38 der Niederdruckturbine 5 kann dann die Zwischenkühlungsluft gemäß Pfeil Z beispielsweise ins Freie geblasen werden. Die genannte Kühlung des Gehäuses 38 der Niederdruckturbine ist ferner mittels eines Ventils 39 abschaltbar bzw. steuerbar. Mittels des Ventils besteht also die Möglichkeit, die Turbinenbauteilkühlung erst einige wenige Sekunden nach dem Beginn einer Triebwerksbeschleunigungsphase wirksam werden zu lassen, um so allzu harte Schaufelanstreifvorgänge am betreffenden Gehäuse 38 bzw. an den zugehörigen Einlaufbelägen, zu verhindern. Solange also die Kühlung des Gehäuses 38 der Niederdruckturbine 5 in den ersten Sekunden der Beschleunigungsphase abgeschaltet ist bzw. unterbrochen ist, kann die aus dem Wärmetauscher abströmende entsprechend aufbereitete Luft zunächst entweder gemäß Pfeil X ins Freie abgeblasen werden oder aber anderweitigen Versorgungszwecken zugeführt werden.

Eine weitere Möglichkeit der sinnvollen Verwendung der Zwischenkühlungsluft V wäre der Einsatz zur Aufheizung des Gehäuses 38 beim Anfahren der Niederdruckturbine 5 (Fig.3). Hierzu ist in einer ersten Betriebsphase mittels des Ventils 39 Zwischenkühlungslluft V dem GEhäuse 38 zuzuführen und damit das Gehäuse aufzuheizen. Hierdurch kann eine üblicherweise vorhandene thermische Trägheit des Gehäuses 38 reduziert werden und als Resultat hiervon der Laufspalt zwischen Gehäuse 38 und Laufschaufeln an den Laufrädern verringert werden. Nach erfolgter Aufheizung des Gehäuses 38 kann durch Umschalten des Ventils 39 die Zwischenkühlungsluft ins Freie (Pfeil X) abgeblasen oder anderweitig, z.B. zur Kühlung, verwendet werden.

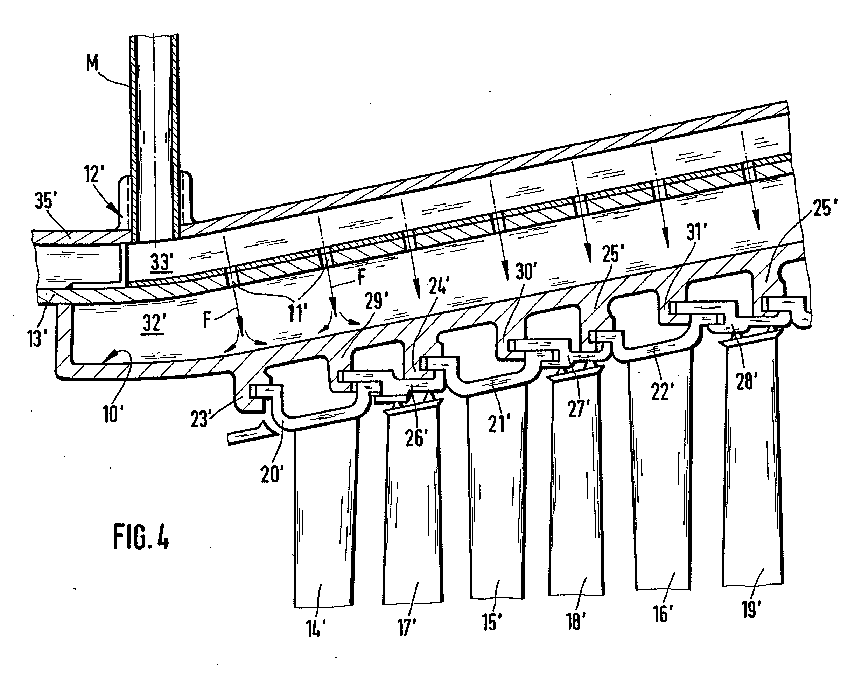

Fig .4 erläutert im Detail Einzelheiten der in Fig.1 nur schematisch dargestellten Niederdruckturbine 5 mit Gehäusebauteilkühlung. Gemäß Fig.4 sind also die Leitschaufeln dreier aufeinander folgender Turbinenstufen der Reihe nach mit $14'$,$15'$ und $16'$, die zugehörigen Laufschaufeln mit $17'$, $18'$, und $19'$ bezeichnet. Jeweils auf der linken Seite sind den Leitschaufeln $14'$,$15'$ und $16'$ zugehörige Fußsegmente $20'$, $21'$, $22'$ an Haken $23'$, $24'$, $25'$ des Turbinengehäuses $10'$ (Innenteil) aufgehängt. Jeweils auf der rechten Seite sind die Fußsegmente $20'$, $21'$, $22'$ an die Laufschaufeldeckbandspitzen ummantelnden Dichtungssegmentträgern $26'$, $27'$, $28'$, aufgehängt; die letzteren sind einerseits an Gehäusehaken $29'$, $30'$, $31'$ aufgehängt, andererseits zwischen den Enden der Gehäusehaken, z.B. $24'$, $25'$ sowie den angrenzenden Abschnitten der Fußsegmente, z.B. $21'$,$22'$ eingeklemmt.

Gemäß Fig. 4 mündet also die in Fig. 3 schon genannte Leitung M in einen Ringkanal $33'$ ein; der genannte Ringkanal $33'$ ist zwischen einer ganz außen liegenden bzw. äußeren Gehäusewand $35'$ und einer radial dazu beabstandeten Gehäusewandung $13'$ ausgebildet; zwischen der zuvorgenannten, radial innen liegenden Gehäusewand $13'$ und der weiteren ganz innen liegenden Wand $10'$ des Turbinengehäuses ist dann ein Ringraum $32'$ ausgebildet, der über Prallkühlbohrungen $11'$ mit dem weiter außen liegenden Ringkanal $33'$ kommuniziert. Bei eingeschaltetem Ventil 39 (Fig.3) kann also die über den Zwischenkühlungsprozeß aufbereitete Luft V über die Leitung M in den äußeren Ringkanal $33'$ einfließen und von dort über die zuvor schon genannten Prallkühlbohrungen $11'$ örtlich gezielt gegen die betreffenden, die Haken bzw. Hakenbereiche enthaltenden Zonen des inneren Wandabschnitts $10'$ des Gehäuses geblasen werden. Bezüglich der genannten Gehäusehaken, z.B. $23'$, $29'$ oder $24'$ kann also die Aufprallkühlluft örtlich gezielt gegen die die jeweils größten thermischen Massen enthaltenden Bereiche der inneren Gehäusewandung $10'$ geblasen werden. Dabei geht die Erfindung von der allgemeinen technischen Überlegung aus, daß bei einer Beschleunigung der Gasturbinenanlage das Ansprechverhalten der genannten Laufschaufeln $17'$, $18'$, $19'$ sehr schnell (schnelle Ausdehnung) erfolgt, während das zugehörige Gehäuse, hier also Innenteil $10'$ aufgrund der größeren Masse erste verzögert nachkommt, bzw. bezüglich des thermischen Dehnungsverhaltens zeitlich hinterherhinkt. Als Folge davon verringern sich die betreffenden Turbinenlaufschaufelspalte sehr stark bis zu einem Einlaufen im betreffenden Dichtungsbelag; wäre nun die über die Zwischenkühlung (Wärmetauscher 8) gewonnene Kühl- bzw. Steuer- bzw. Aufprallluft (Pfeile F) schon vom Beginn der Beschleunigung der Gasturbinenanlage an voll wirksam, so würde die Dehnung des inneren Gehäuseteils $10'$ noch weiter verzögert; es käme somit zu einem verstärktem Dichtungseinlauf, der im geringstem Fall zu einer verhältnismäßig starken Verschleiß der Laufschaufelspitzen bzw. der Spitzendichtungen auf der einen Seite, wie aber auch der betreffenden Einlaufbeläge auf der anderen Seite führt. Im Wege des Steuerventils 39 (Fig. 3) kann also ein normalerweise am Anfang einer Triebwerksbeschleunigungsphase im Rahmen eines zeitlichen Sekundenbereiches allzu harter Dichtungseinlaufvorgang verhindert werden.

In den Ausführungsbeispielen nicht weiter verdeutlicht, besteht erfindungsgemäß die Möglichkeit, nicht nur Luft, Wasser, Wasserdampf, sondern gegebenenfalls auch einen verflüssigten metallischen Wärmeträger im Rahmen der Zwischenkühlung vorzusehen, diesen metallischen Wärmeträger im Rahmen des Arbeitsprozesses der Anlage nutzbar zu machen, insbesondere zur Bauteilkühlung wie aber auch zur thermischen Steuerung von Strukturbauteilen der Anlage wie aber auch der betreffenden Turbinen.

Abweichend von den Ausführungsbeispielen der Gasturbinenanlagen nach Fig. 1 oder 3 sieht die Erfindung ferner vor, die Zwischenkühlung zwischen einem auf einer Welle eines Hochdrucksystems (Gasgenerators) sitzenden Hochdruckverdichter und einem auf einer separaten Welle eines Niederdrucksystems sitzenden Niederdruckverdichter vorzusehen. Für diesen Fall würde also das Hochdrucksystem bzw. der Gasgenerator lediglich aus den Komponenten 2,3 und 4 bestehen, während die Niederdruckturbine 5 über eine separate Welle durch die Hohlwelle W des Gasgenerators zu führen wäre, um den auf der separaten Welle des Niederdrucksystems befindlichen Niederdruckverdichter 1 anzutreiben.

Abweichend von den Ausführungsbeispielen nach Fig. 1 oder 3 bzw. dem zuvorgenannten Ausführungsbeispiel bzw. als Ergänzung dazu, könnten erfindungsgemäß ferner Hoch- und Niederdruckteil bzw. Hoch- und Niederdruckverdichter axial durchströmt ausgebildet werden.

In Ausgestaltung der Erfindung könnte ferner der Hochdruckverdichter als Radialverdichter, der Niederdruckverdichter als Axialverdichter ausgebildet sein.

Wie anhand Fig. 1 schon verdeutlicht, soll eine Pumpe 11 zur Förderung des hier von außen über den Behälter 10 zugeführten Wassers vorgesehen sein; erfindungsgemäß kann selbstverständlich bei jeglicher Verwendung eines flüssigen Mittels für die Zwischenkühlung, z.B. auch hinsichtlich eines metallischen Wärmeträgers, eine eben-solche Pumpenförderung, wie in Fig.1 dargestellt, vorgesehen sein.

## Ansprüche

1. Gasturbinenanlage, bei der die aus einem Hochdruckteil des Verdichters abströmende Verdichterluft vor ihrem Eintritt in einen Niederdruckteil des Verdichters über einen Wärmetauscher unter Beiziehung eines von außen zugeführten Kühlmittels zwischengekühlt wird, dadurch gekennzeichnet, daß das zwischengekühlte Kühlmittel zur Turbinenkühlung verwendet wird.

2. Gasturbinenanlage nach Anspruch 1, dadurch gekennzeichnet, daß das abströmende Kühlmittel zur Kühlung von Leit- und/oder Laufschaufeln (12,13) einer oder mehrerer Turbinen (5) verwendet wird.

3. Gasturbinenanlage nach Anspruch 1 oder 2, dadurch gekennzeichnet, daß das abströmende Kühlmittel zur Turbinengehäusekühlung verwendet wird.

4. Gasturbinenanlage nach Anspruch 1, dadurch gekennzeichnet, daß das abströmende Kühlmittel zur thermischen Steuerung von Bauteilen der Gasturbinenanlage, insbesondere Turbinengehäusestrukturen (10' bzw. 23',29'24'), zwecks Radialspaltkontrolle, verwendet wird.

5. Gasturbinenanlage nach einem oder mehreren der Ansprüche 1 bis 4, dadurch gekennzeichnet, daß das Kühlmittel aus Luft, Wasser, Wasserdampf oder einem verflüssigten metallischen Wärmeträger besteht.

6. Gasturbinenanlage nach einem oder mehreren der Ansprüche 1 bis 5, dadurch gekennzeichnet, daß die Zwischenkühlung zwischen jeweils auf gemeinsamer Gasgeneratorwelle (W) sitzendem Hoch- und Niederdruckteil bzw. Hoch- und Niederdruckverdichter (2,2) vorgesehen ist.

7. Gasturbinenanlage nach einem oder mehreren der Ansprüche 1 bis 7, dadurch gekennzeichnet, daß die Zwischenkühlung zwischen einem auf einer Welle eines Hochdruckverdichter und einem auf einer Welle eines Niederdrucksystems sitzenden Niederdruckverdichter vorgesehen ist.

8. Gasturbinenanlage nach Anspruch 6 oder 7, dadurch gekennzeichnet, daß Hoch- und Niederdruckteil bzw. Hoch- und Niederdruckverdichter axial durchströmt ausgebildet sind.

9. Gasturbinenanlage nach Anspruch 6 oder 7, dadurch gekennzeichnet, daß der Hochdruckverdichter als Radialverdichter, der Niederdruckverdichter als Axialverdichter ausgebildet ist.

10. Gasturbinenanlage nach Anspruch 6 oder 7, dadurch gekennzeichnet, daß der Hochdruckverdichter (2) als Radialverdichter, der Niederdruckverdichter (1) als doppelflutiger, Rücken an Rücken radial beschaufelter und durchströmter Verdichter ausgebildet ist, der über einen gemeinsamen Luftaustritt (9) für die Niederdruck-Verdichterluft (D) an den Wärmetauscher (8) für die Zwischenkühlung angeschlossen ist.

11. Gasturbinenanlage nach Anspruch 5 unter Verwendung von Wasser oder eines flüssigen metallischen Wärmeträgers für die Zwischenkühlung, dadurch gekennzeichnet, daß das Wasser oder der Wärmeträger pumpengefördert ist.

12. Gasturbinenanlage nach Anspruch 5 unter Verwendung von Luft für die Zwischenkühlung, dadurch gekennzeichnet, daß die Luft (U) über einen separat motorisch angetriebenen Verdichter (37) in den Wärmetauscher (8) gefördert wird.

13. Gasturbinenanlage nach Anspruch 4, dadurch gekennzeichnet, daß das aus dem Wärmetauscher (8) abströmende Kühlmittel (V) mittels eines Steuerventils (39) in Abstimmung auf das sich beim Arbeitsprozeß ändernde zeitliche thermische Dehnungsverhalten von Laufschaufeln (17',18',19') und Gehäuse (10') um- bzw. ein- oder abschaltbar ist.

EP 0 348 676 A2

FIG.1

FIG.2

FIG. 3

FIG.4

EP 0 348 676 A2